# EUROPÄISCHE PATENTSCHRIFT

(11) **EP 1 507 688 B1**
(45) Veröffentlichungstag und Bekanntmachung des Hinweises auf die Patenterteilung: **17.10.2007**
(21) Anmeldenummer: 03755139.7
(22) Anmeldetag: 27.05.2003
(51) Int. Cl.: B60R 22/46

(54) **SICHERHEITSGURTAUFROLLER MIT EINER VORSTRAFFEINRICHTUNG**
SAFETY BELT RETRACTOR COMPRISING A PRE-TENSIONING DEVICE
ENROULEUR DE CEINTURE DE SECURITE DOTE D'UN DISPOSITIF DE PRETENSION

(30) Priorität: 29.05.2002 DE 10224236
(43) Veröffentlichungstag der Anmeldung: 23.02.2005
(73) Patentinhaber: AUTOLIV DEVELOPMENT AB, 447 83 Vargarda (SE)
(72) Erfinder: LUCHT, Andreas, 25358 Horst (DE); WITTENBERG, Geert, Helge, Norderstedt 22848 (DE); MATZEN, Frank, 22459 Hamburg (DE); ZIEL, Erik, 25451 Quickborn (DE); GROSS, Peer, 22761 Hamburg (DE); PATEL, Yogel, S-44133 Alingsas (SE)
(74) Vertreter: Müller, Karl-Ernst
(86) Internationale Anmeldenummer: PCT/EP2003/005545
(87) Internationale Veröffentlichungsnummer: WO 2003/099619

(56) Entgegenhaltungen:
- EP-A- 0 893 313
- WO-A-00/71394
- WO-A-99/51469
- DE-A- 19 640 842
- DE-U- 20 212 088
- DE-U- 20 217 804
- US-A- 4 579 294

## Beschreibung

Die Erfindung betrifft einen Sicherheitsgurtaufroller insbesondere für den Einsatz in Kraftfahrzeugen, mit einem fahrzeugsensitiv und/oder gurtbandsensitiv angesteuerten Blockiersystem und mit einer auf die Gurtwelle einwirkenden Straffeinrichtung zur Ausführung einer reversiblen Vorabstraffung des Insassen, wobei die Gurtwelle mit einem von einem Elektromotor als Strafferantrieb über ein zwischengeschaltetes Getriebe kuppelbar ist.

Ein Sicherheitsgurtaufroller mit dem vorgenannten Merkmalen ergibt sich aus der EP 0 893 313 A2. An die Gurtwelle des Gurtaufrollers ist ein sowohl in der Gurtabwickelrichtung als auch in der Gurtaufwickelrichtung drehbarer Elektromotor ankuppelbar, von welchem über ein zwischengeschaltetes Getriebe in Abhängigkeit von bestimmten Fahrsituationen einstellbare Drehmomente auf die Gurtwelle zur Einwirkung bringbar sind. Dabei kann in einer vorgegebenen Schaltposition des Getriebes das vom Elektromotor gelieferte Drehmoment zum Straffen des Gurtbandes auf die Gurtwelle übertragen werden. Hinsichtlich eines derartigen Straffens ist bei dem bekannten Sicherheitsgurtaufroller in eine sogenannte Vorstraffung und in eine Leistungsstraffung unterschieden. Im Rahmen der sogenannten Vorstraffung wird der angeschnallte Insasse bei Auftreten von Geschwindigkeitsänderungen bzw. Verzögerungswerten unterhalb der für die Auslösung der Leistungsstraffung bei einem Unfall maßgeblichen Auslöseschwelle mit einem verminderten Drehmoment des Elektromotors in seine normale Sitzposition gezogen und Gurtlose aus dem Sicherheitsgurt herausgenommen. Da bei Nachlassen der Geschwindigkeitsänderung die Vorab-Straffung beendet wird und als reversibler Vorgang bei Auftreten einer weiteren entsprechenden Fahrsituation erneut eingeleitet wird, wird dem angeschnallten Fahrzeuginsassen ein Gefühl aktiver Sicherheit vermittelt. Wird die Auslöseschwelle für die Leistungsstraffung bei einem Unfall überschritten, arbeitet der Elektromotor mit einem entsprechend hohen Drehmoment.

Im Zusammenhang mit der Vorstraffung des Sicherheitsgurtes kann die nachteilige Situation einer Selbstblockade des Sicherheitsgurtes eintreten dadurch, daß über die Vorstraffung alle Gurtlose aus dem Sicherheitsgurtsystem genommen ist und der Sicherheitsgurt am Körper der angeschnallten Person stramm anliegt, wobei je nach Fahrsituation am Ende des Vorstraffervorganges nicht ausgeschlossen ist, daß über eine geringe Vorwärtsver-lagerung des Körpers des angeschnallten Insassen die Sperrscheibe des gurtaufrollerseitigen Blockiersystems in einen lastübertragenden Eingriff mit einem Gehäuseteil einsteuert wird. Soweit in dieser Sperrstellung der Sperrscheibe es einer Rückdrehung der Gurtwelle in Gurteinzugsrichtung bedarf, um die Sperrscheibe aus ihrer lastübertragenden Stellung herauszuführen, muß in nachteiliger Weise auch nach Abschluß jeder reversiblen Vorstraffung eine zusätzliche Nachstraffung mit einer etwas höheren Kraft als beim Vorstraffen erfolgen, was zu einer unerwünschten Belastung des Systems bzw. Minderung des Tragekomforts für den Fahrzeuginsassen führt.

Der Erfindung liegt daher die Aufgabe zugrunde, bei einem Sicherheitsgurtaufroller mit den gattungsgemäßen Merkmalen ein frühzeitiges Ansprechen des Blockiersystems zu vermeiden und dadurch eine Selbstblockade auszuschalten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass als Getriebe zum Anschluss der Gurtwelle an den Elektromotor eine mit einer Außenverzahnung der Gurtwelle kämmende Schneckenverzahnung vorgesehen ist, wobei sich die Schneckenverzahnung gegen ein ortsfestes Widerlager derart abstützt, dass bei einer gegen das Widerlager gerichteten axialen Belastung der Schneckenverzahnung durch eine an der Gurtwelle in Gurtauszugsrichtung angreifende Last mittels einer Abstützkraft eine Hemmung der Schneckendrehung zur Aufnahme des von der Gurtwelle ausgeübten Drehmoments herbeigeführt ist.

Soweit die Erfindung als Getriebestufe zur Übertragung der Antriebsbewegung des Elektromotors auf die Gurtwelle eine Schneckenverzahnung vorschlägt, beinhaltet der Erfindungsgedanke auch, durch eine geeignete Auslegung der Schneckenverzahnung bzw. durch sonstige Maßnahmen im Anschluß an die Straffbewegung mit einer Drehung der Gurtwelle in Gurtaufwickelrichtung eine Rückdrehung der Gurtwelle aufgrund einer an der Gurtwelle in Gurtabwickelrichtung angreifenden Last dadurch zu verhindern, daß die Drehung der Schneckenverzahnung in der entsprechenden Drehrichtung so weit gehemmt ist, daß das von der Gurtwelle ausgehende Drehmoment abgefangen wird, ohne eine Rückdrehung der Gurtwelle zuzulassen. Damit ist in vorteilhafter Weise ein Ansprechen des Blockiersystems verhindert. Dabei ist die Schneckenverzahnung derart ausgelegt, daß in der einen Drehrichtung der Schneckenverzahnung, nämlich in der Straffrichtung entsprechend der Gurtaufwickelrichtung, der Getriebewirkungsgrad voll nutzbar ist, während in der Gegendrehrichtung, also entsprechend der Gurtabwickelrichtung, die Hemmung der Schneckendrehung dadurch herbeigeführt wird, daß sich die Schneckenverzahnung gegen ein ortsfestes Widerlager derart abstützt, daß bei einer gegen das Widerlager gerichteten axialen Belastung der Schneckenverzahnung durch die Gurtwelle die Hemmung der Schneckendrehung durch die Abstützkraft herbeigeführt ist. Soweit nämlich im Anschluß an die Ausführung der Vorstraffung von der Gurtwelle her ein Drehmoment auf die Schneckenverzahnung einwirkt, führt dies zu einer axialen Belastung der Schneckenverzahnung, die in eine entsprechend wirkende Abstützkraft umsetzbar ist.

Soweit gemäß der EP 0 893 313 A2 auch eine Leistungsstraffung für den Crashfall vorgesehen ist, ist der Einsatz eines Elektromotors mit einem als Schneckenverzahnung ausgebildeten Getriebe auch für die Leistungsstraffung nicht ausgeschlossen, soweit der Elektromotor zur Aufbringung eines entsprechenden Drehmoments eingerichtet ist. Allerdings kann die Leistungsstraffung auch über einen anderen, auf die Gurtwelle einwirkenden Strafferantrieb oder über eine in anderen Bereichen des Sicherheitsgurtsystems angeordnete Straffeinrichtung wie beispielsweise einen Schloßstraffer erfolgen.

Nach einem Ausführungsbeispiel der Erfindung ist vorgesehen, daß die Schneckenverzahnung mittels eines Winkelgetriebes an eine Antriebswelle des Elektromotors gekoppelt ist. Hiermit ist eine besonders platzsparende Bauweise des Sicherheitsgurtaufrollers verbunden, weil der Elektromotor unmittelbar über dem Wellenteil des Sicherheitsgurtaufrollers angeordnet werden kann.

Soweit nach einem Ausführungsbeispiel der Erfindung als Winkelgetriebe ein Kronenradgetriebe vorgesehen ist, ergeben sich daraus fertigungstechnische Vorteile. Alternativ ist jedoch auch die Anordnung eines Kegelradgetriebes denkbar, wobei die Toleranzlagen eines Kegelradgetriebes bei einer Großserienfertigung nur mit hohem Aufwand beherrschbar wären. Insofern ist aber die Anwendung eines Kegelradgetriebes zur Verwirklichung der Erfindung nicht ausgeschlossen.

Nach einem Ausführungsbeispiel der Erfindung ist vorgesehen, daß die Schneckenverzahnung an einer Trägerwelle ausgebildet und die Trägerwelle an das Winkelgetriebe angeschlossen ist.

Die Hemmung der Schneckendrehung läßt sich dabei nach einem Ausführungsbeispiel der Erfindung dadurch herbeiführen, daß zwischen dem Widerlager und dem ersten Gang der Schneckenverzahnung ein reibungserhöhendes Bauteil angeordnet ist. Das reibungserhöhende Bauteil kann nach einem Ausführungsbeispiel der Erfindung als eine Zwischenscheibe aus einem Material mit einem nichtlinearen Reibungskoeffizienten ausgebildet sein; so stehen insbesondere Elastomere zur Verfügung, bei denen mit einer zunehmenden Krafteinwirkung eine exponentiell ansteigende Reibkraft auftritt.

Alternativ kann vorgesehen sein, daß eine sich mit zunehmender Last axial elastisch verformende Lagerscheibe angeordnet ist, so daß der erste Gang der Schneckenverzahnung unter Einwirkung der Abstützkraft auf einen größeren Durchmesser im Lager läuft als ohne Einwirken der Stützkraft.

In einer weiteren Ausführungsform der Erfindung ist vorgesehen, daß die der Schneckenverzahnung zugewandte Fläche des Getriebegehäuses mit einer kegelförmigen Einziehung versehen ist und auf der Trägerwelle ein formentsprechend ausgestalteter kegelförmiger Reibungskörper aus einem elastischen Material angeordnet ist; hierbei wird die Erhöhung der Reibkraft durch die kegelige Form von Einziehung und Reibungskörper sowie die elastische Verformung bewirkt.

In einer weiteren Alternative kann vorgesehen sein, daß zwischen Getriebegehäuse und Schneckenverzahnung eine Druckfeder angeordnet ist und Trägerwelle und Getriebegehäuse bei axialer Verschiebung der Trägerwelle ineinandergreifende Rastgestaltungen aufweisen; anstelle der Druckfeder kann auch am entsprechenden Ende der Trägerwelle eine Zugfeder angeordnet sein.

Nach einem Ausführungsbeispiel der Erfindung ist zur Erzeugung der Hemmung der Schneckendrehung vorgesehen, daß sich die Trägerwelle stirnseitig gegen einen Schaft der Antriebswelle des Elektromotors abstützt, so daß dadurch ein entsprechendes Bremsmoment erzeugt wird.

Alternativ kann vorgesehen sein, daß die Kronenradverzahnung des zwischen Antriebswelle des Elektromotors und der Trägerwelle für die Schneckenverzahnung wirksamen Kronenradgetriebes mehrstufig ausgebildet ist derart, daß sich bei axialer Belastung der Trägerwelle die Übersetzung des Kronenradgetriebes ändert und so ein Bremsmoment für die Drehung der Trägerwelle mit Schneckenverzahnung erzeugt wird.

Sofern die konstruktiven Maßnahmen zur Hemmung der Schneckendrehung noch nicht ausreichen sollten, kann zur weiteren Aufnahme des von der Gurtwelle ausgehenden Drehmoments vorgesehen sein, daß der Elektromotor mit einem weiteren Leistungsbereich zur Aufbringung eines der Unterstützung der Hemmung der Schneckenverzahnung dienenen Haltemoments ausgelegt ist, so daß zusätzlich zu der Hemmung der Schneckendrehung vom Elektromotor eine Blockierung der Rückdrehung der Schneckenverzahnung entsprechend der Abwickelrichtung des Gurtbandes über ein entsprechendes Haltemoment aufgebracht wird.

Da jedoch mit den Maßnahmen zur Hemmung der Rückdrehung der Schneckenverzahnung bereits ausreichende Momente aufgefangen werden können, eröffnet die Auslegung des Elektromotors mit einem der Erzeugung eines Haltemoments dienenden Leistungsbereich zusätzlich die Möglichkeit, während einer bei dem gattungsgemäßen Sicherheitsgurtaufroller zusätzlich vorgesehenen Kraftbegrenzungsphase ein gesteuertes Haltemoment einzustellen und damit eine adaptive Kraftbegrenzung beispielsweise gemeinsam mit einem einstufig oder auch mehrstufig ausgebildeten Torsionsstab zu verwirklichen. Hierzu kann vorgesehen sein, daß das Haltemoment des Elektromotors durch die Motorsteuerung in Abhängigkeit von der an der Gurtwelle in Gurtauszugsrichtung wirkenden Last einstellbar ist.

Hinsichtlich der Anordnung der Schneckenverzahnung ist nach einem Ausführungsbeispiel der Erfindung vorgesehen, daß die die Schneckenverzahnung tragende Trägerwelle an ihrem dem Winkelgetriebe gegenüberliegenden Ende in einem Lager gehalten und in dem Bereich zwischen der Schneckenverzahnung und dem Winkelgetriebe in einem zusätzlichen, von einem Lagergehäuse umschlossenen Axiallager gelagert ist.

Zweckmäßig ist dabei die Ausbildung des Axiallagers als Kalottenlager, weil hierdurch eine Auslenkung der Trägerwelle aus der axialen Ausgangslage um einen geringen Winkel ermöglicht wird, womit ebenfalls eine Erhöhung der Getriebereibung im Sinne der Erfindung einstellbar ist.

Soweit die Lagerung der Trägerwelle in einem zusätzlichen Lagergehäuse verwirklicht ist, ist es nach einem Ausführungsbeispiel der Erfindung in zweckmäßiger Weise vorgesehen, daß das Lagergehäuse das Widerlager für die Schneckenverzahnung bildet.

In der Zeichnung sind Ausführungsbeispiele der Erfindung wiedergegeben, welche nachstehend beschrieben sind. Es zeigen:
- Fig. 1: einen Sicherheitsgurtaufroller mit Vorstraffeinrichtung in einer Gesamtansicht,
- Fig. 2: den Sicherheitsgurtaufroller gemäß Fig. 1 in einer Seitenansicht seiner Strafferseite mit Vorstraffeinrichtung,
- Fig. 3: die Vorstraffeinrichtung gemäß Fig. 1 und 2 in einer Einzeldarstellung in Seitenansicht,
- Fig. 4: die Hemmung der Schneckendrehung durch Abstützung der Schneckenverzahnung gegen das Lagergehäuse in einer Prinzipdarstellung in einer ersten Ausführungsform,
- Fig. 5: den Gegenstand der Fig. 4 in einer weiteren Ausführungsform,
- Fig. 6: den Gegenstand der Fig. 4 in einer weiteren Ausführungsform,
- Fig. 7: den Gegenstand der Fig. 4 in einer weiteren Ausführungsform,
- Fig. 8: den Gegenstand der Fig. 4 in einer weiteren Ausführungsform,
- Fig. 9: die Hemmung der Schneckendrehung durch Ausnutzung der Radialkräfte in den Lagerungen der Trägerwelle in einer Prinzipdarstellung,
- Fig. 10: die Hemmung der Schneckendrehung durch Abstützung der Trägerwelle gegen die Antriebswelle des Elektromotors,
- Fig. 11: die Hemmung der Schneckendrehung durch Abstützung der Trägerwelle in dem Kronenradgetriebe.

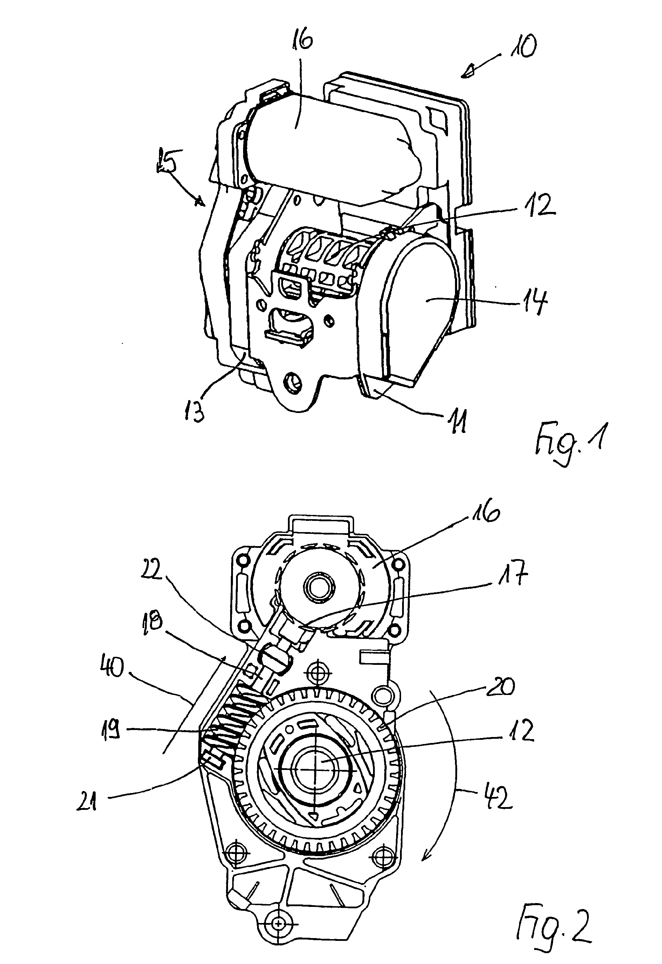

Der aus Fig. 1 ersichtliche Sicherheitsgurtaufroller 10 hat ein U-förmiges Gehäuse 11, in dessen U-Schenkeln eine Gurtwelle 12 in an sich bekannter Weise gelagert ist. Die Gurtwelle 12 steht unter der Wirkung einer in einer Federkassette 13 angeordneten Aufwickelfeder, die nach Abwickeln des nicht dargestellten Gurtbandes von der Gurtwelle 12 beim Ablegen des Sicherheitsgurtes für das Wiederaufwickeln des Gurtbandes auf der Gurtwelle 12 sorgt. Auf der in Fig. 1 nicht weiter dargestellten, der der Anbringung der Federkassette 13 gegenüberliegenden Systemseite des Gehäuses 11 ist das in seinen Einzelheiten nicht dargestellte, insoweit also als bekannt vorauszusetzende Blockiersystem des Gurtaufrollers unter einer Abdeckkappe 14 angeordnet, welches mittels gurtbandsensitiv bzw. fahrzeugsensitiv wirkender Steuersysteme in seiner Funktion anzusteuern ist.

Auf der die Federkassette 13 aufweisenden Seite des Gehäuses ist zusätzlich mit dem Bezugszeichen 15 ein Vorstraffergehäuse angedeutet, dem ein Elektromotor 16 als Strafferantrieb zugeordnet ist.

Wie sich hierzu näher aus Fig. 2 und 3 entnehmen läßt, wirkt der Elektromotor 16 mit seiner Antriebswelle 34 über ein Kronenradgetriebe 17 auf eine in einer tangentialen Ausrichtung zur Gurtwelle 12 angeordnete Trägerwelle 18, auf der eine Schneckenverzahnung 19 angeordnet ist, die mit einer an der Gurtwelle 12 befindlichen Außenverzahnung 20 kämmt. Die Trägerwelle 18 ist in einem Endlager 21 sowie in einem zwischen der Schneckenverzahnung 19 und dem Kronenradgetriebe 17 angeordneten Kalottenlager 22 gelagert, wobei das Kalottenlager 22 in einem in den Fig. 2 und 3 nicht weiter dargestellten, jedoch aus den Fig. 4 bis 8 ersichtlichen Lagergehäuse 23 angeordnet ist.

Bei dem dargestellten Ausführungsbeispiel ist die Schneckenverzahnung 19 nicht als selbsthemmende Schnecke ausgebildet, so daß durch zusätzliche konstruktive Maßnahmen dafür Sorge getragen ist, daß bei einer im Anschluß an eine Vorstraffung auf die Gurtwelle 12 einwirkenden Last in Gurtauszugsrichtung (Pfeil 42) die von der Gurtwelle 12 auf die Schneckenverzahnung 19 und damit auf die Trägerwelle 18 ausgeübte Axialkraft (Pfeil 40) in eine reibungserhöhende Abstützkraft umgesetzt wird, so daß hierdurch eine Hemmung der Drehbewegung der Schneckenverzahnung 19 herbeigeführt ist.

Ausführungsbeispiele für die Bewirkung der Erhöhung der Reibkraft sind in den Fig. 4 bis 8 zunächst dargestellt, wobei bei dem in Fig. 4 dargestellten Ausführungsbeispiel zwischen dem ersten Gang der Schneckenverzahnung 19 und dem Lagergehäuse 23 des Kalottenlagers 22 eine Zwischenscheibe 25 aus einem Material mit einem nichtlinearen Reibungskoeffizienten angeordnet ist. Bei diesem Material kann es sich um ein geeignetes Elastomer handeln, bei dem mit einer Steigerung der einwirkenden Axialkraft die Reibkraft exponentiell ansteigt.

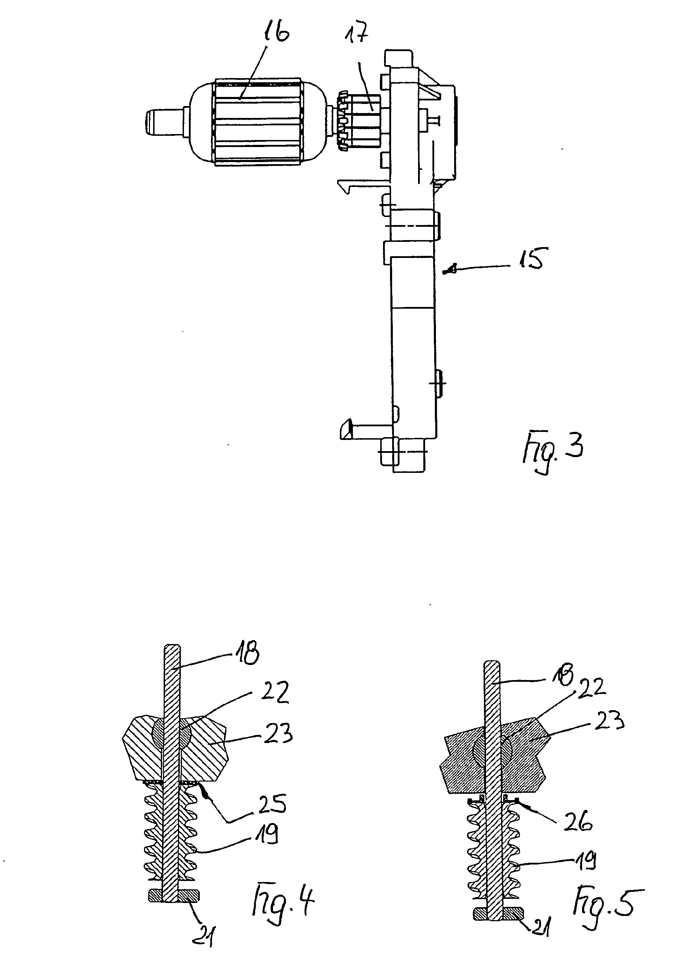

In ähnlicher Weise wirkt die gemäß Fig. 5 zwischen Schneckenverzahnung 19 und Lagergehäuse 23 angeordnete Lagerscheibe 26, bei der unter Einwirkung der Axialkraft (Pfeil 40) die Schneckenverzahnung auf einem größeren Durchmesser im Lager läuft als unter normaler Belastung.

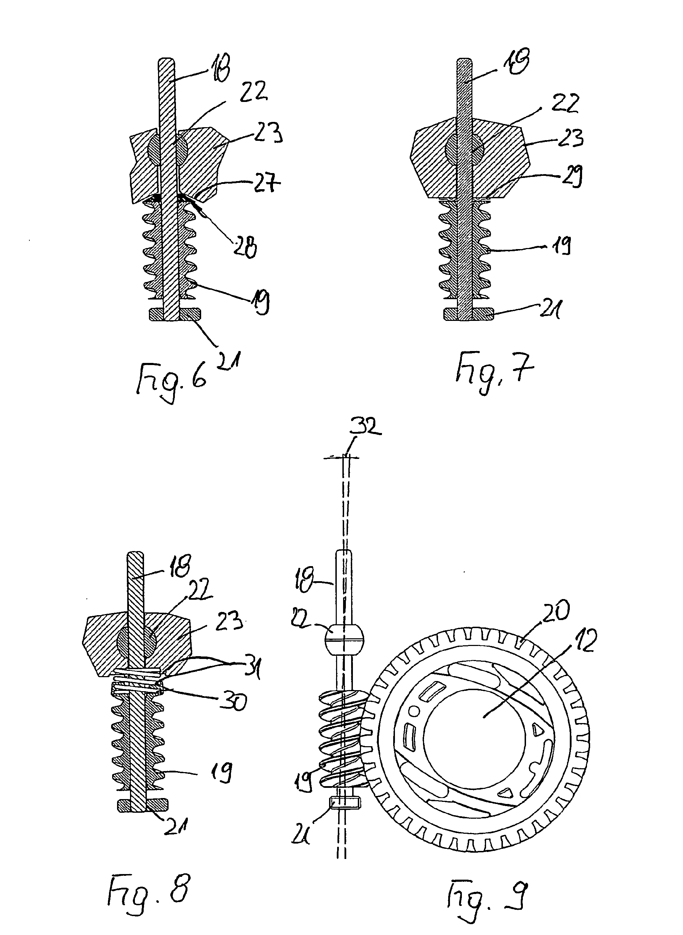

Bei dem in Fig. 6 dargestellten Ausführungsbeispiel weist das Lagergehäuse 23 eine kegelförmige Einziehung 27 auf, in die ein formentsprechender kegelförmiger Reibungskörper 28 aus einem elastischen Material eingreift, so daß durch die kegelige Form sowie die elastische Verformung des Reibungskörpers 28 die Reibkraft zwischen Schneckenverzahnung 19 und Lagergehäuse 23 erhöht wird.

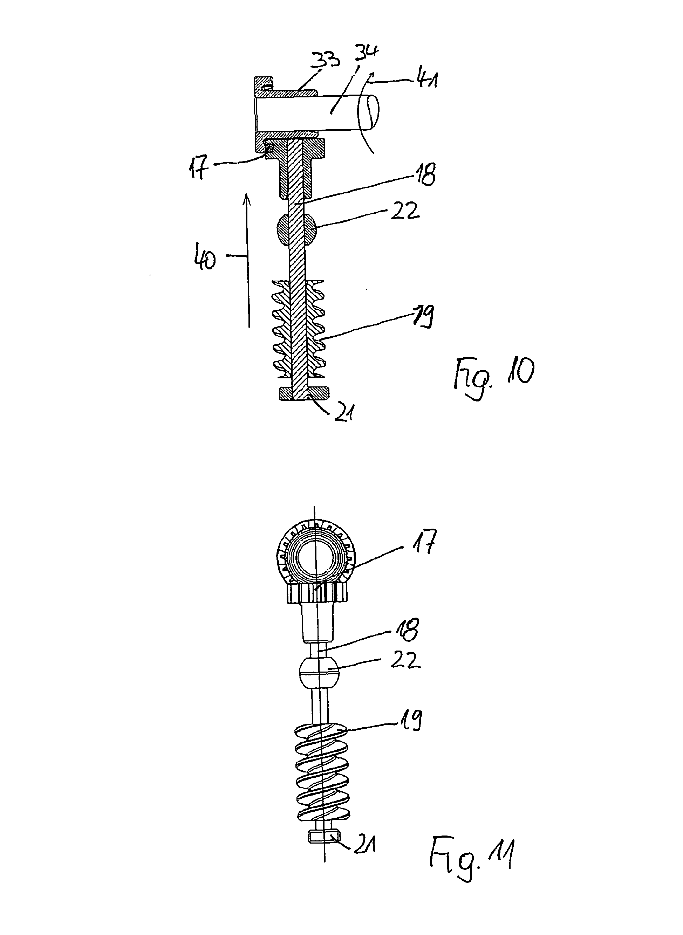

In gleicher Weise ist bei dem in Fig. 7 dargestellten Ausführungsbeispiel zwischen Schneckenverzahnung 19 und Lagergehäuse 23 eine Blechscheibe 29 angeordnet, die sich unter Krafteinwirkung elastisch verformt, so daß sich die Reibfläche erhöht und der Reibwiderstand ansteigt. Hier wäre alternativ auch eine sogenannte "Knackfrosch"-Lösung zu verwirklichen.

Bei dem in Fig. 8 dargestellten Ausführungsbeispiel ist zwischen dem Lagergehäuse 23 und der Schneckenverzahnung 19 eine Druckfeder 30 angeordnet, wobei zusätzlich eine Formschlußgestaltung 31 zwischen Lagergehäuse 23 und dem ersten Gang der Schneckenverzahnung 19 vorgesehen ist, so daß bei Krafteinwirkung (Pfeil 40) die Feder 30 zusammengedrückt wird, bis die Formschlußgestaltungen 31 ineinander verrasten.

In Fig. 9 ist die Möglichkeit dargestellt, die Reibkraft zwischen der Schneckenverzahnung 19 und der Außenverzahnung 20 der Gurtwelle 12 dadurch zu erhöhen, daß bei axialer Krafteinwirkung auf die Trägerwelle 18 sich diese in dem Kalottenlager 22 um einen geringen Winkel 32 verkippt.

In Fig. 10 ist die Möglichkeit dargestellt, daß sich die Trägerwelle 18 stirnseitig auf einem Schaft 33 der Antriebswelle 34 des Elektromotors 16 abstützt und hierdurch ein entsprechendes Bremsmoment erzeugt wird.

In Fig. 11 ist angedeutet, daß die Kronenradverzahnungen des zwischen Antriebswelle 34 des Elektromotors 16 und der Trägerwelle 18 wirksamen Kronenradgetriebes 17 mehrstufig ausgebildet ist derart, daß sich bei axialer Belastung der Trägerwelle (Pfeil 40) die Übersetzung des Kronenradgetriebes 17 von schnell auf langsam ändert, wobei alternativ oder zusätzlich eine Verschlechterung des Verzahnungswirkungsgrades in den Stufen des Kronenradgetriebes 17 eingerichtet sein kann.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitsgurtaufroller (10), insbesondere für den Einsatz in Kraftfahrzeugen, mit einem fahrzeugsensitiv und/oder gurtbandsensitiv angesteuerten Blockiersystem und mit einer auf die Gurtwelle (12) einwirkenden Straffeinrichtung zur Ausführung einer reversiblen Vorabstraffung des Insassen, wobei die Gurtwelle (12) mit einem von einem Elektromotor (16) als Strafferantrieb über ein zwischengeschaltetes Getriebe kuppelbar ist, **dadurch gekennzeichnet, dass** als Getriebe zum Anschluss der Gurtwelle (12) an den Elektromotor (16) eine mit einer Außenverzahnung (20) der Gurtwelle (12) kämmende Schneckenverzahnung (19) vorgesehen ist, wobei sich die Schneckenverzahnung (19) gegen ein ortsfestes Widerlager (23) derart abstützt, dass bei einer gegen das Widerlager (23) gerichteten axialen Belastung der Schneckenverzahnung (19) durch eine an der Gurtwelle (12) in Gurtauszugsrichtung (Pfeil 40) angreifende Last mittels einer Abstützkraft eine Hemmung der Schneckendrehung zur Aufnahme des von der Gurtwelle (12) ausgeübten Drehmoments herbeigeführt ist.

2. Sicherheitsgurtaufroller nach Anspruch 1, **dadurch gekennzeichnet, dass** die Schneckenverzahnung (19) mittels eines Winkelgetriebes (17) an eine Antriebswelle (34) des Elektromotors (16) gekoppelt ist.

3. Sicherheitsgurtaufroller nach Anspruch 2, **dadurch gekennzeichnet, dass** das Winkelgetriebe als Kronenradgetriebe (17) ausgebildet ist.

4. Sicherheitsgurtaufroller nach einem der Ansprüche 1 bis 3, **dadurch gekennzeichnet, dass** die Schneckenverzahnung (19) an einer Trägerwelle (18) ausgebildet und die Trägerwelle (18) an das Winkelgetriebe (17) angeschlossen ist.

5. Sicherheitsgurtaufroller nach einem der Ansprüche 1 bis 4, **dadurch gekennzeichnet, dass** zwischen dem Widerlager (23) und dem ersten Gang der Schneckenverzahnung (19) ein reibungserhöhendes Bauteil (25, 26, 28, 30) angeordnet ist.

6. Sicherheitsgurtaufroller nach Anspruch 5, **dadurch gekennzeichnet, dass** eine Zwischenscheibe (25) aus einem Material mit einem nichtlinearen Reibungskoeffizienten vorgesehen ist.

7. Sicherheitsgurtaufroller nach Anspruch 5, **dadurch gekennzeichnet, dass** eine sich mit zunehmender Last axial elastisch verformende Lagerscheibe (26) angeordnet ist.

8. Sicherheitsgurtaufroller nach Anspruch 5, **dadurch gekennzeichnet, dass** die der Schneckenverzahnung (19) zugewandte Fläche des Widerlagers (23) mit einer kegelförmigen Einziehung versehen ist und auf der Trägerwelle (18) ein formentsprechend ausgestalteter kegelförmiger Reibungskörper (28) aus einem elastischen Material angeordnet ist.

9. Sicherheitsgurtaufroller nach Anspruch 5, **dadurch gekennzeichnet, dass** zwischen Widerlager (23) und Schneckenverzahnung (19) eine Druckfeder (30) angeordnet ist und Trägerwelle (18) und Widerlager (23) bei axialer Verschiebung der Trägerwelle (18) ineinandergreifende Rastgestaltungen (31) aufweisen.

10. Sicherheitsgurtaufroller nach Anspruch 1, **dadurch gekennzeichnet, dass** sich die Trägerwelle (18) stirnseitig gegen einen Schaft (33) der Antriebwelle (34) des Elektromotors (16) abstützt.

11. Sicherheitsgurtaufroller nach Anspruch 1, **dadurch gekennzeichnet, dass** die Kronenradverzahnung des zwischen Antriebswelle (34) des Elektromotors (16) und Trägerwelle (18) wirksamen Kronenradgetriebes (17) mehrstufig ausgebildet ist derart, dass sich bei axialer Belastung der Trägerwelle (18) die Übersetzung des Kronenradgetriebes (17) ändert.

12. Sicherheitsgurtaufroller nach einem der Ansprüche 1 bis 11, **dadurch gekennzeichnet, dass** der Elektromotor (16) mit einem weiteren Leistungsbereich zur Aufbringung eines der Unterstützung der Hemmung der Schneckenverzahnung (19) dienenen Haltemoments ausgelegt ist.

13. Sicherheitsgurtaufroller nach Anspruch 12, **dadurch gekennzeichnet, dass** das Haltemoment des Elektromotors (16) durch die Motorsteuerung in Abhängigkeit von der an der Gurtwelle (12) in Gurtauszugsrichtung wirkenden Last einstellbar ist.

14. Sicherheitsgurtaufroller nach einem der Ansprüche 1 bis 13, **dadurch gekennzeichnet, dass** die die Schneckenverzahnung (19) tragende Trägerwelle (18) an ihrem dem Winkelgetriebe gegenüberliegenden Ende in einem Lager (21) gehalten und in dem Bereich zwischen der Schneckenverzahnung (19) und dem Winkelgetriebe (17) in einem zusätzlichen, von einem Lagergehäuse (23) umschlossenen Axiallager (22) gelagert ist.

15. Sicherheitsgurtaufroller nach Anspruch 14, **dadurch gekennzeichnet, daß** das Axiallager als Kalottenlager (22) ausgebildet ist.

16. Sicherheitsgurtaufroller nach Anspruch 14 oder 15, **dadurch gekennzeichnet, dass** das Lagergehäuse (23) das Widerlager für die Schneckenverzahnung (19) bildet.

## Claims

1. Safety belt retractor (10), especially for use in motor vehicles, having a blocking System that is controlled in a vehicle sensitive and/or belt strap sensitive manner, and with a tensioning device, which acts on the belt shaft (12), for carrying out a reversible pretensioning of the occupant, whereby the belt shaft (12) can be coupled with an electric motor (16), as a tensioner drive, via an interposed gear mechanism, **characterized in that** as the gear mechanism for the connection of the belt shaft (12) to the electric motor (16), a worm or spiral toothing (19) is provided that meshes with an external toothing (20) of the belt shaft (12),whereby the spiral toothing (19) is supported against a fixed counter-bearing (23) in such a way that upon the occurrence of an axial loading of the spiral toothing (19) directed against the counter-bearing (23) due to a load acting upon the belt shaft (12) in the belt withdrawal direction (arrow 40), a rotation of the spiral, for receiving the torque applied by the belt shaft (12), is prevented via a support force.

2. Safety belt retractor according to Claim 1, **characterized in that** the spiral toothing (19) is coupled to a drive shaft (34) of the electric motor (16) via a miter-wheel gearing (17).

3. Safety belt retractor according to Claim 2, **characterized in that** the miter-wheel gearing is embodied as a crown wheel gear mechanism (17).

4. Safety belt retractor according to one of the Claims 1 to 3, characterizecf in that the spiral toothing (19) is formed on a carrier shaft (18), and the carrier shaft (18) is connected to the miter-wheel gearing (17).

5. Safety belt retractor according to one of the Claims 1 to 4, **characterized in that** a friction-increasing component (25, 26, 28, 30) is disposed between the counter-bearing (23) and the first thread of the spiral toothing (19).

6. Safety belt retractor according to claim 5, **characterized in that** a spacer disk (25) of a material having a non-linear coefficient of friction is provided.

7. Safety belt retractor according to claim 5, **characterized in that** a bearing disk (26) is provided that deforms axially and elastically as the load increases.

8. Safety belt retractor according to claim 5, **characterized in that** the surface of the counter-bearing (23) that faces the spiral toothing (19) is provided with a conical recess, and disposed on the carrier shaft (18) is a conical friction body (28) that has a corresponding shape and is made of an elastic material.

9. Safety belt retractor according to claim 5, **characterized in that** a compression spring (30) is disposed between counter-bearing (23) and spiral toothing (19), and carrier shaft (18) and counter-bearing (23) are provided with latching structures (31) that interengage during axial displacement of the carrier shaft (18).

10. Safety belt retractor according to claim 1, **characterized in that** the end face of the carrier shaft (18) is supported against a shank (33) of the drive shaft (34) of the electric motor (16).

11. Safety belt retractor according to claim 1, **characterized in that** the crown wheel toothing of the crown wheel gear mechanism (17), which is effective between drive shaft (34) of the electric motor (16) and carrier shaft (18), has a multi-stage configuration such that during axial loading of the carrier shaft (18), the transmission of the crown wheel gear mechanism (17) changes.

12. Safety belt retractor according to one of the claims 1 to 11, **characterized in that** the electric motor (16) is designed with a further performance range for applying a holding moment that aids in the prevention of the rotation of the spiral toothing (19).

13. Safety belt retractor according to claim 12, **characterized in that** the holding moment of the electric motor (16) can be adjusted by the motor control as a function of the load that acts on the belt shaft (12) in the belt withdrawal direction.

14. Safety belt retractor according to one of the claims 1 to 13, **characterized in that** the carrier shaft (18), which carries the spiral toothing (19), at its end that is opposite the miter-wheel gearing, is held in a bearing (21), and in the region between the spiral toothing (19) and the miter-wheel gearing (17) is mounted in an additional thrust bearing (22) that is surrounded by a bearing housing (23).

15. Safety belt retractor according to claim 14, **characterized in that** the thrust bearing is embodied as a cup-shaped bearing (22).

16. Safety belt retractor according to claim 14 or 15, **characterized in that** the bearing housing (23) forms the counter-bearing for the spiral toothing (19).

## Revendications

1. Enrouleur de ceinture de sécurité (10), destiné en particulier à être utilisé dans des véhicules automobiles, comportant un système de blocage activé de manière sensible au véhicule et/ou de manière sensible à la ceinture, et comportant un prétensionneur agissant sur l'arbre d'enroulement (12) pour exercer une pré-tension réversible sur l'occupant du siège, l'arbre d'enroulement (12) pouvant être couplé à un moteur électrique (16), agissant en tant qu'entraînement du prétensionneur, par l'intermédiaire d'un engrenage intercalé, **caractérisé en ce que**, pour former l'engrenage destiné à coupler l'arbre d'enroulement (12) avec le moteur électrique (16), il est prévu une denture hélicoïdale (19) engrenant dans une denture extérieure (20) de l'arbre d'enroulement (12), la denture hélicoïdale (19) étant en appui contre une butée (23) fixe, de telle sorte que, lors d'une sollicitation axiale dirigée contre la butée (23) et exercée sur la denture hélicoïdale (19) par une charge appliquée au moyen d'une force d'appui sur l'arbre d'enroulement (12) dans le sens de déroulement de la ceinture (flèche 40), la rotation de la vis sans fin est arrêtée pour absorber le couple de rotation exercé par l'arbre d'enroulement (12).

2. Enrouleur de ceinture de sécurité selon la revendication 1, **caractérisé en ce que** la denture hélicoïdale (19) est couplée à un arbre d'entraînement (34) du moteur électrique (16) au moyen d'un engrenage conique (17).

3. Enrouleur de ceinture de sécurité selon la revendication 2, **caractérisé en ce que** l'engrenage conique est réalisé sous la forme d'un engrenage à roue de chant (16).

4. Enrouleur de ceinture de sécurité selon l'une quelconque des revendications 1 à 3, **caractérisé en ce que** la denture hélicoïdale (19) est réalisée sur un arbre de support (18) et l'arbre de support (18) est raccordé à l'engrenage conique (17).

5. Enrouleur de ceinture de sécurité selon l'une quelconque des revendications 1 à 4, **caractérisé en ce qu'**un élément (25, 26, 28, 30) augmentant le frottement est agencé entre la butée (23) et le premier pas de la denture hélicoïdale (19).

6. Enrouleur de ceinture de sécurité selon la revendication 5, **caractérisé en ce qu'**il est prévu un disque intermédiaire (25) réalisé dans un matériau avec un coefficient de frottement non linéaire.

7. Enrouleur de ceinture de sécurité selon la revendication 5, **caractérisé en ce qu'**il est prévu un disque d'appui (26) se déformant élastiquement dans le sens axial sous l'effet d'une charge croissante.

8. Enrouleur de ceinture de sécurité selon la revendication 5, **caractérisé en ce que** la surface de la butée (23), orientée vers la denture hélicoïdale (19), comporte un retrait conique, et sur l'arbre de support (18) est agencé un corps de frottement (28) conique, réalisé avec une forme correspondante dans un matériau élastique.

9. Enrouleur de ceinture de sécurité selon la revendication 5, **caractérisé en ce qu'**un ressort de pression (30) est agencé entre la butée (23) et la denture hélicoïdale (19), et l'arbre de support (18) et la butée (23) comportent des structures d'arrêt (31) engrenant l'une dans l'autre en cas de déplacement axial de l'arbre de support (18).

10. Enrouleur de ceinture de sécurité selon la revendication 1, **caractérisé en ce que** l'arbre de support (18) prend appui sur le côté frontal contre une tige (33) de l'arbre d'entraînement (34) du moteur électrique (16).

11. Enrouleur de ceinture de sécurité selon la revendication 1, **caractérisé en ce que** la denture de la roue de chant de l'engrenage à roue de chant (17), agissant entre l'arbre d'entraînement (34) du moteur électrique (16) et l'arbre de support (18), est une denture étagée, de telle sorte que, lors d'une sollicitation axiale de l'arbre de support (18), le développement de l'engrenage à roue de chant (17) varie.

12. Enrouleur de ceinture de sécurité selon l'une quelconque des revendications 1 à 11, **caractérisé en ce que** le moteur électrique (16) est conçu avec un autre domaine de puissance pour appliquer un couple de retenue destiné à favoriser l'arrêt de la denture hélicoïdale (19).

13. Enrouleur de ceinture de sécurité selon la revendication 12, **caractérisé en ce que** le moment de retenue du moteur électrique (16) peut être réglé par la commande du moteur en fonction de la charge agissant sur l'arbre d'enroulement (12) dans le sens de déroulement de la ceinture.

14. Enrouleur de ceinture de sécurité selon l'une quelconque des revendications 1 à 13, **caractérisé en ce que** l'arbre de support (18) portant la denture hélicoïdale (19) est logé dans un palier (21) au niveau de son extrémité opposée à l'engrenage conique et, dans la zone entre la denture hélicoïdale (19) et l'engrenage conique (17), est logé dans un palier axial (22) supplémentaire, entouré par un logement de palier (23).

15. Enrouleur de ceinture de sécurité selon la revendication 14, **caractérisé en ce que** le palier axial est réalisé sous la forme d'un palier à calottes sphériques (22).

16. Enrouleur de ceinture de sécurité selon la revendication 14 ou 15, **caractérisé en ce que** le logement de palier (23) forme la butée pour la denture hélicoïdale (19).
